# EUROPÄISCHE PATENTSCHRIFT

(11) **EP 0 978 349 B1**
(45) Veröffentlichungstag und Bekanntmachung des Hinweises auf die Patenterteilung: **26.07.2006**
(21) Anmeldenummer: 99890254.8
(22) Anmeldetag: 02.08.1999
(51) Int. Cl.: B23Q 1/54, B23Q 11/08, B25J 17/02, B25J 19/00

(54) **Arbeitsstation**
Work station
Poste de travail

(30) Priorität: 03.08.1998 AT 134198
(43) Veröffentlichungstag der Anmeldung: 09.02.2000
(73) Patentinhaber: Krauseco Werkzeugmaschinen GmbH, 1120 Wien (AT)
(72) Erfinder: Holy, Franz, 2000 Stockerau (AT); Steiner, Karl, 1230 Wien (AT)
(74) Vertreter: Müllner, Erwin

(56) Entgegenhaltungen:
- WO-A-97/47428
- DE-A- 4 309 719
- DE-A- 19 607 370
- US-A- 5 401 128
- US-A- 5 715 729
- PATENT ABSTRACTS OF JAPAN vol. 1998, no. 10, 31. August 1998 (1998-08-31) -& JP 10 138085 A (HOOKOSU KK), 26. Mai 1998 (1998-05-26)
- PATENT ABSTRACTS OF JAPAN vol. 017, no. 139 (M-1385), 22. März 1993 (1993-03-22) -& JP 04 315546 A (MORI SEIKI CO LTD), 6. November 1992 (1992-11-06)

## Beschreibung

Die Erfindung bezieht sich im Allgemeinen auf eine Arbeitsstation mit einem steifen Maschinengestell und einem gegenüber diesem frei bewegbaren Arbeitskopf, dessen Bewegungen entlang einer vorgegebenen Hauptbewegungsrichtung und auch entlang einer ersten und einer zweiten Querachse, die schräg oder normal zur Hauptbewegungsrichtung stehen, durch einen vom Maschinengestell getragenen Bewegungsmechanismus erzeugt werden, der einen mit dem Arbeitsskopf verbundenen, frei bewegbaren Tragkörper besitzt, der von mit ihm gelenkig verbundenen Streben getragen und bewegt wird, die gegenüber dem Maschinengestell individuell bewegbar und durch im Maschinengestell angeordnete Antriebsmotoren individuell antreibbar sind, wobei das steife Maschinengestell einen den Bewegungsmechanismus umgebenden, den Bewegungsraum der Streben zumindest teilweise in sich aufnehmenden Maschinenkörper bildet, der eine dem Arbeitsraum des Arbeitskopfes zugewandte Austrittsöffnung für die zum Tragkörper führenden Abschnitte der Streben besitzt, wobei zum Abdecken des vorderen Endabschnitts des Bewegungsraums der individuell bewegbaren Streben eine Abdeckung vorgesehen ist. Die Erfindung bezieht sich im Besonderen auf Arbeitsstationen für Werkzeugmaschinen, Transfermaschinen, Bearbeitungszentren u. dgl.

Die Streben können als mit einer stationären Plattform des Maschinengestelles gelenkig verbundene und durch die Antriebsmotore des Bewegungsmechanismus in ihrer Länge individuell veränderbare Streben ausgebildet sein, die mit ihren individuellen Längenänderungen den Tragkörper samt Arbeitskopf bewegen. Alternativ dazu können die Streben als, mit im Maschinengestell angeordneten Linearantrieben bzw. Antriebe mit Kugelgewindetrieben gelenkig verbundene und in ihrer Länge unveränderbare Streben ausgebildet sein, die an ihren hinteren Enden durch die Linearantriebe individuell verschoben werden und mit ihren am Tragkörper angelenkten vorderen Enden den Tragkörper samt Arbeitskopf bewegen.

### STAND DER TECHNIK:

Aus der WO 9747428A ist eine Arbeitsstation, nach dem Oberbegriff des Anspruchs 1, mit einem gegenüber einem steifen Maschinengestell frei bewegbaren Arbeitskopf bekannt, der am unteren Ende eines vertikalen Bewegungsmechanismus angebracht ist und von einer oberhalb des Arbeitsraumes des Arbeitskopfes von einer an der Decke des Maschinengestelles angebrachten, horizontalen, oberen Plattform herabhängt.

Der Bewegungsmechanismus umfasst sechs, mit der oberen Plattform jeweils über ein oberes Kugelgelenk gelenkig verbundene, in ihrer Länge individuell veränderbare Streben, die von der oberen Plattform weg nach unten schräg zusammenlaufen und an ihren unteren Enden jeweils über ein unteres Kugelgelenk mit einem Tragkörper für den Arbeitskopf gelenkig verbunden sind.

Jede Strebe ist Teil einer linear bewegbaren Schraubenspindel eines die obere Plattform nach oben überragenden Schraubenspindeltriebes, der durch das obere Kugelgelenk der Strebe mit der oberen Plattform mechanisch verbunden ist. Die das obere Kugelgelenk der Strebe durchsetzende Schraubenspindel endet im unteren Kugelgelenk der Strebe. Über den Antriebsmotor des Schraubenspindeltriebes wird die Schraubenspindel aus dem oberen Kugelgelenk der Strebe nach unten in den Arbeitsraum hinein ausgefahren oder nach oben eingezogen. Die jeweils über das obere Kugelgelenk der Strebe nach unten vorstehende einstellbare Länge der Schraubenspindel bestimmt die jeweils aktuelle Länge der längenveränderbaren Strebe.

Bei diesem Bewegungsmechanismus wirken die von den Schraubenspindeltrieben der Streben fortlaufend erzeugten individuellen Längenänderungen der sechs Streben zusammen und erzeugen miteinander die freie Bewegung des Tragkörpers gegenüber der oberen feststehenden Plattform, wobei die sechs Streben fortlaufend ihre individuelle und gegenseitige räumliche Ausrichtung ändern. Um den Tragkörper mit dem Arbeitskopf mit einer vorgegebenen räumlichen Ausrichtung entlang einer vorgegebenen Bahn zu bewegen, werden die individuellen Längenänderungen der sechs Streben aufeinander abgestimmt. Diese Abstimmung erfolgt durch eine Computersteuerung, die die Antriebsmotore der Schraubenspindeltriebe der Streben individuell ansteuert. Die obere Plattform, die den Arbeitsraum begrenzt, wirkt als Abdeckung und schützt den Bewegungsmechanismus vor Spänen bei der spanabhebenden Bearbeitung bzw. beim Zerspanen von Werkstücken.

Der beschriebene vertikale Bewegungsmechanismus mit seinen sechs unabhängig voneinander bewegbaren, räumlich im Wesentlichen vertikal ausgerichteten Streben wird in der Praxis auch als vertikaler Hexapod bezeichnet.

Bei dem anderen bekannten vertikalen Bewegungsmechanismus bzw. Hexapoden dieser Art ist eine flexible, sich nach unten verjüngende Manschette vorgesehen, die mit ihrem oberen Ende am Maschinengestell fixiert ist und sich entlang der sechs Streben nach unten zum Tragkörper für den Arbeitskopf erstreckt. Die Manschette ist entlang ihrer Längsachse mit aufeinander folgenden, konzentrischen Ausgleichsfalten versehen. Diese Manschette ist hauptsächlich auf das Ausgleichen von vertikalen Hub- und Senkbewegungen, also Bewegungen in Hauptbewegungsrichtung des Tragkörpers ausgelegt. Bei allen davon abweichenden Bewegungen der unteren Plattform wird die Manschette durch die mit diesen Bewegungen jeweils verbundenen mehrdimensionalen, sich fortlaufend ändernden und rasch wechselnden Verzerrungen bzw. Deformierungen ständig wechselnder Bereiche der Manschette außerordentlich stark beansprucht. Dies führt sehr rasch zum Ermüden des flexiblen Manschettenmateriales und zu Beschädigungen in der Manschette an den am stärksten beanspruchten Stellen der Manschette, wenn man die Manschette nicht vorzeitig austauschen will. Diese Manschette besitzt also nur eine sehr kurze Lebensdauer, wenn mit dem Bewegungsmechanismus bzw. mit dem von diesem bewegten Arbeitskopf innerhalb des Arbeitsraumes des Arbeitskopfes in rascher Abfolge an verschiedenen Stellen, verschieden schnelle und unterschiedlich weit raumgreifende Bewegungen mit jeweils rasch wechselnden Beschleunigungen und Verzögerungen ausgeführt werden.

Eine weitere bekannte Arbeitsstation sieht als steifes Maschinengestell einen horizontalen, im Querschnitt sechseckigen Tunnel vor, der in einigem Abstand neben dem Arbeitsraum des Arbeitskopfes angeordnet ist und einem horizontalen Bewegungsmechanismus enthält, der den an seinem vorderen Ende angebrachten Arbeitskopf über die gesamte horizontale Tiefe und die gesamte vertikale Höhe des Arbeitsraumes gegenüber dem Maschinengestell frei bewegt.

Der Bewegungsmechanismus umfasst sechs horizontale, am Tunnelboden bzw. an den beiden oberen, schrägen Tunnelseitenwänden paarweise nebeneinander angeordnete Linearmotore, die mit ihren bewegbaren Motorteilen jeweils über ein hinteres Kugelgelenk mit den hinteren Enden von sechs gleich langen und in ihrer Länge jeweils unveränderbaren Streben gelenkig verbunden sind. Die Streben laufen von den Linearantrieben weg nach vorne schräg zusammen und sind jeweils nur geringfügig schräg zur Horizontalen angeordnet. An ihren im Bereich des Arbeitsraumes des Arbeitskopfes angeordneten, vorderen Enden sind die Streben jeweils über ein vorderes Kugelgelenk mit einer im Wesentlichen vertikalen Plattform gelenkig verbunden, von der der Arbeitskopf horizontal nach vorne ragt.

Bei diesem Bewegungsmechanismus wirken die sechs unverlängerbaren Streben mit ihren von den Linearantrieben fortlaufend erzeugten, individuellen Verschiebungen zusammen und ergeben die räumliche Bewegung des Tragkörpers für den Arbeitskopf.

Dieser Bewegungsmechanismus mit seinen sechs im Wesentlichen horizontal angeordneten, von horizontalen Linearantrieben bewegten Streben wird in der Praxis auch als horizontaler Hexapod bezeichnet.

Eine Abdeckung der aus dem Tunnel vorstehenden Abschnitte der Streben des horizontalen Hexapoden ist nicht vorgesehen.

Die JP 10138085 A betrifft ein Bearbeitungszentrum klassischer Bauart mit drei den Koordinaten Z, X und Y (Hauptbewegungsrichtung, 1. Querachse, 2. Querachse) entsprechend überlagerten Werkzeugschlitten zur Positionierung eines Werkzeuges. Um zu verhindern, dass die die Schlitten umfassende Baugruppe durch Spänefall beeinträchtigt wird, läuft stirnseitig an dem das Werkzeug tragenden Schlitten eine Abdeckung mit, die den Arbeitsraum begrenzt. Diese Abdeckung weist eine in Hauptbewegungsrichtung und in Richtung einer ersten Querachse verschiebbare Mittelwand auf. Der Tragkörper für das Werkzeug bzw. für einen Arbeitskopf nimmt die Mittelwand in Richtung der zweiten Querachse mit. Dazu ist der Tragkörper mit der Mittelwand verbunden bzw. gekuppelt. Beiderseits der Mittelwand schließen teleskopierbare Seitenwände an. Von Nachteil ist, dass die Abdeckung eine Ebene bildet und in ihrer Gesamtheit in Hauptbewegung verschiebbar sein muss.

### ZUSAMMENFASSUNG DER ERFINDUNG:

Aufgabe der Erfindung ist es, eine verbesserte Arbeitsstation mit einem gegenüber dem steifen Maschinengestell mittels eines Bewegungsmechanismus auf der Basis der Stabkinematik frei bewegbaren Arbeitskopf anzugeben.

Zur Lösung dieser Aufgabe wird vorgeschlagen, dass die Abdeckung eine in Hauptbewegungsrichtung und in Richtung der ersten Querachse verschiebbare Mittelwand aufweist, dass der Tragkörper mit der Mittelwand über eine Bewegungskupplung verbunden ist, die innerhalb der Mittelwand eine Bewegung in Richtung der zweiten Querachse zulässt, dass in Richtung der ersten Querachse beidseitig an die Mittelwand zwei in sich längenveränderliche Seitenwände anschließen, dass der Austrittsöffnung ein Abdeckschacht vorgelagert ist, der durch zwei zur Mittelwand und zu den Seitenwänden normale Schachtwände seitlich begrenzt ist und dass die Seitenwände mit der Mittelwand und mit den Seitenrändern der Austrittsöffnung, an denen die beiden Schachtwände nicht anschließen, schwenkbar verbunden sind.

Die erfindungsgemäße Ausbildung der Arbeitsstation sieht eine den Bewegungsraum der individuell bewegbaren Streben des jeweiligen, z.B. horizontalen oder vertikalen Bewegungsmechanismus seitlich und nach vorne abdeckende, mit dem Arbeitskopf mitbewegbare Abdeckung vor.

Einerseits können Temperaturschwankungen und Späne von dem präzise gesteuerten Bewegungsmechanismus festgehalten werden. Beim Hochgeschwindigkeitszerspanen von Gussteile entstehen sehr viele kleine, aber sehr heiße Späne, die im Kontakt mit einer Strebe des Bewegungsmechanismus diese Strebe örtlich erwärmen und deren Beitrag zur Bewegung des Arbeitskopfes verfälschen würden.

Der Abdeckschacht und die bewegliche Abdeckung bilden eine sich in ihrer dreidimensionalen Gestalt an die jeweilige Stellung des Arbeitskopfes fortlaufend anpassende Abdeckhaube für den vorderen Endabschnitt des Streben-Bewegungsraumes. Die zur Hauptbewegungsrichtung des Arbeitskopfes parallele Längserstreckung bzw. Ausladung der Abdeckhaube wird durch die Bewegung des Arbeitskopfes fortlaufend verändert. Diese sich ergebende Abdeckhaube besitzt eine sich ständig ändernde, zumeist im Querschnitt im Wesentlichen trapezförmige Gestalt, deren Trapezform durch die gegenüber den Schachtwänden bewegbaren und untereinander beweglich verbundenen Wände der beweglichen Abdeckung bestimmt wird. Die einander gegenüberliegenden, zur Hauptbewegungsrichtung des Arbeitskopfes jeweils parallelen seitlichen Wände der in sich beweglichen vorderen Abdeckhaube werden von den beiden stationären Schachtwänden des Abdeckschachtes des Maschinengestelles gebildet.

Diese Ausbildung der den Bewegungsraum der individuell bewegbaren Streben des Bewegungsmechanismus seitlich und nach vorne abdeckenden, mit dem Arbeitskopf zum Teil mitbewegbaren Abdeckung ermöglicht eine deutliche Verkürzung des in Richtung der Hauptbewegungsrichtung des Arbeitskopfes ständig mitzubewegenden, von der vorderen Abdeckhaube gebildeten Teiles der Abdeckung und dadurch ist eine Möglichkeit der Verringerung der mit dem Arbeitskopf stets mitzubewegenden Massen gegeben.

Die erfindungsgemäße Ausbildung der den Bewegungsraum der individuell bewegbaren Streben des Bewegungsmechanismus seitlich und nach vorne abdeckenden, mit dem Arbeitskopf zum Teil mitbewegbaren Abdeckung ist bei Hochgeschwindigkeits-Arbeitsstationen von Vorteil, bei denen der Arbeitskopf mit sehr hohen Geschwindigkeiten hin und her bewegt und dabei bei jeder Bewegungsumkehr zusammen mit allen mit ihm mitzubewegenden Massen sehr stark beschleunigt bzw. verzögert wird.

Gemäß einem weiteren Merkmal der Erfindung kann vorgesehen sein, dass als in sich längenveränderliche Seitenwand der beweglichen Abdeckung ein, in einer Ebene auseinander ziehbarer und wieder zusammenschiebbarer Faltenbalg vorgesehen ist.

Alternativ dazu kann vorgesehen sein, dass als in sich längenveränderliche Seitenwand der beweglichen Abdeckung in einer Ebene auseinander ziehbare und wieder zusammenschiebbare, untereinander bewegliche verbundene Teleskopbleche vorgesehen sind.

Eine weitere Ausführungsform der Erfindung sieht vor, dass die Austrittsöffnung und die Mittelwand der beweglichen Abdeckung senkrecht zur Hauptbewegungsrichtung des Arbeitskopfes angeordnet ist und dass der Maschinenkörper bis nahe an den Arbeitsraum des Arbeitskopfes heranreicht.

Schließlich ist es nach einem weiteren Merkmal der Erfindung zweckmäßig, wenn die Bewegungskupplung bei einem mit seinen Streben Schwenkbewegungen des Tragkörpers erzeugenden Bewegungsmechanismus eine mit dem Tragkörper über ein Kugelgelenk allseitig verschwenkbar verbundene Kulissenplatte besitzt, die in Richtung der zweiten Querachse des Tragkörpers verschiebbar angeordnet ist und nur die zu den Schachtwänden parallelen Bewegungsanteile der Tragkörperbewegung auf die Mittelwand der beweglichen Abdeckung überträgt.

Diese Ausbildung der vorderen Abdeckhaube ist bei Bewegungsmechanismen von Vorteil, bei denen die durch die Streben erzeugen Bewegung des Tragkörpers bzw. Arbeitskopfes Schwenkanteile und/oder Kippanteile enthalten, denen die Bewegungskupplung nachgibt ohne die bewegliche Abdeckung zu kippen oder zu verschwenken. Diese Ausbildung erlaubt eine einfache Anpassung der vorderen Abdeckhaube an Bewegungsmechanismen, die als Hexapod ausgebildet sind.

Gemäß einem weiteren Merkmal der Erfindung kann vorgesehen sein, dass bei einem horizontalen Bewegungsmechanismus eine mit der Mittelwand der beweglichen Abdeckung mitbewegbare, den Tragkörper am Maschinengestell vertikal abstützende Tragkörper-Stützvorrichtung vorgesehen ist.

Diese Ausbildung der vorderen Abdeckhaube erlaubt es, den horizontalen Bewegungsmechanismus und die Computersteuerung der Bewegungen seiner Streben zu vereinfachen, weil das vom Gewicht des Tragkörpers und des Arbeitskopfes, bezogen auf die hinteren Enden der Streben erzeugte statische Moment durch die Tragkörper-Stützvorrichtung ausgeglichen wird und nicht mehr fortlaufend durch ein über die individuellen Bewegungen der Streben erzeugtes Ausgleichsmoment ausgeglichen werden muss, das sich mit den fortlaufenden Änderungen der individuellen räumlichen Ausrichtung der Streben fortlaufend ändert und von den Streben auf den an ihren vorderen Enden angelenkten, im Wesentlichen vertikal angeordneten Tragkörper übertragen werden muss.

Gemäß einem weiteren Merkmal der Erfindung kann vorgesehen sein, dass die Tragkörper-Stützvorrichtung zwei parallele, vertikale Stützarme besitzt, die mit dem Tragkörper verbunden sind.

Bei einem horizontalen Bewegungsmechanismus mit Kulissenplatte ist es zweckmäßig, wenn die Tragkörper-Stützvorrichtung mit der Kulissenplatte verbunden ist.

Gemäß einem weiteren Merkmale der Erfindung kann vorgesehen sein, dass die Tragkörper-Stützvorrichtung zwei parallele, vertikale Stützarme besitzt, die mit der mit dem Tragkörper schwenkbar verbundenen Kulissenplatte verbunden sind.

Nachstehend wird die Erfindung an mehreren Ausführungsbeispielen anhand der Zeichnungen näher erläutert.

### KURZE BESCHREIBUNG DER ZEICHNUNGEN:

In den Zeichnungen zeigen:
Fig. 1 eine Draufsicht einer Arbeitsstation mit vertikalem Bewegungsmechanismus und vertikalem Abdeckschacht,
Fig. 2 eine Seitenansicht einer Arbeitsstation mit horizontalem Bewegungsmechanismus und horizontalem Abdeckschacht,
Fig. 3 eine Stirnansicht einer Ausführungsform der vorderen Abdeckhaube,
Fig. 4 einen Schnitt durch den vorderen Teil der Maschinenkörpers und durch eine Ausführungsform der vorderen Abdeckhaube einer Arbeitsstation mit zurückgezogenem Arbeitskopf,
Fig. 5 eine der Fig. 4 entsprechende Darstellung mit vorgeschobenem Arbeitskopf,
Fig. 6 einen Schnitt durch den vorderen Teil des Maschinenkörpers und durch eine weitere Ausführungsform der vorderen Abdeckhaube einer Arbeitsstation mit zurückgezogenem Arbeitskopf,
Fig. 7 eine der Fig. 6 entsprechende Darstellung mit vorgeschobenem Arbeitskopf, und
Fig. 8 eine andere Ausführungsform der Erfindung.

### BESCHREIBUNG VON AUSFÜHRUNGSBEISPIELEN DER ERFINDUNG:

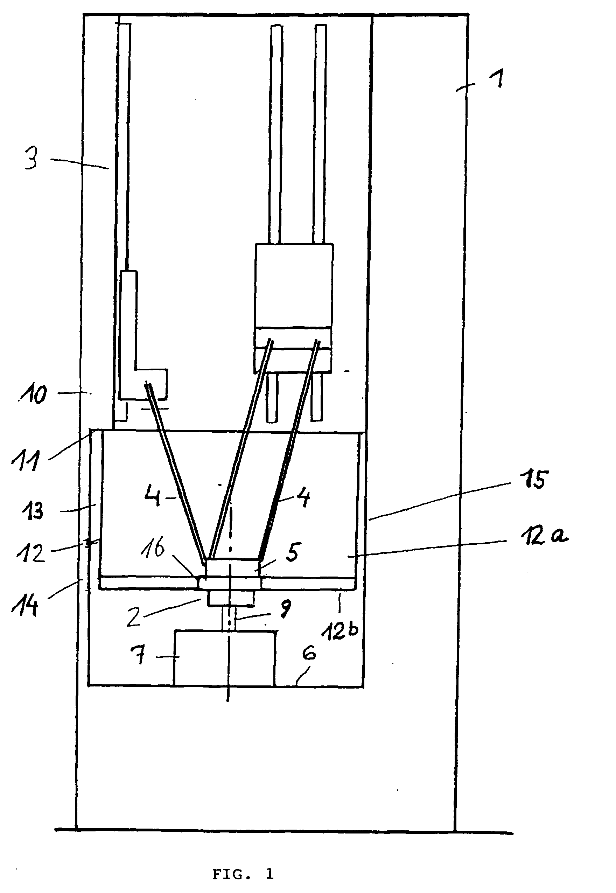

Die Fig. 1 zeigt eine Ausführungsform einer Arbeitsstation mit einem gegenüber einem steifen Maschinengestell 1 frei bewegbaren Arbeitskopf 2. Das Maschinengestell 1 trägt einen vertikalen Bewegungsmechanismus 3, der oberhalb des Arbeitsraumes des Arbeitskopfes 2 angeordnet ist und an seinem unteren Ende den Arbeitskopf 2 trägt.

Der vertikale Bewegungsmechanismus 3 umfasst mehrere, vorzugsweise sechs, gegenüber dem Maschinengestell 1 individuell bewegbare Streben 4, die durch im Maschinengestell 1 angeordnete Antriebsmotore (nicht dargestellt) individuell antreibbar sind. Die Streben 4 sind an ihren unteren Enden jeweils über Kugelgelenke mit einem Tragkörper 5 verbunden, der den Arbeitskopf 2 trägt. Der Bewegungsmechanismus 3 bewegt den Tragkörper 5 durch das Zusammenwirken der Streben 4, deren Antriebsmotore über eine Computersteuerung individuell angesteuert werden, um auf die jeweils gewünschten Bewegungen des Tragkörpers 5 im Voraus abgestimmte individuelle Bewegungen der einzelnen Streben 4 zu erzeugen.

Unterhalb des Bewegungsmechanismus 3 ist ein Arbeitstisch 6 vorgesehen, der an seiner horizontalen Oberseite ein Werkstück 7 trägt, das durch den Arbeitskopf 2 bearbeitet wird, der durch die über die individuell bewegbaren Streben 4 erzeugten Bewegungen des Bewegungsmechanismus 3 gegenüber dem Werkstück 7 positioniert, vorgeschoben und zurückgezogen wird. Der Arbeitskopf 2 ist mit seiner Arbeitsspindel 9 vertikal angeordnet und auf eine vertikale Bohrung im Werkstück 7 ausgerichtet. Die Hauptbewegungsrichtung ist hier vertikal, die Querachsen liegen horizontal, wobei die erste Querachse normal, die zweite Querachse parallel zur Zeichenebene ist.

Das steife Maschinengestell 1 bildet einen den Bewegungsmechanismus 3 umgebenden und einen Teil des Bewegungsraumes der individuell bewegbaren Streben 4 des Bewegungsmechanismus 3 in sich aufnehmenden, steifen Maschinenkörper 10. Dieser deckt den in ihm aufgenommenen Teil des Streben-Bewegungsraumes seitlich ab und reicht nach unten bis nahe an den Arbeitsraum des Arbeitskopfes 2 heran. Der Maschinenkörper 10 besitzt eine dem Arbeitsraum des Arbeitskopfes 2 zugewandte, zur Hauptbewegungsrichtung des Arbeitskopfes 2 senkrechte, Austrittsöffnung 11 für die zum Tragkörper 5 führenden Abschnitte der Streben 4.

Zum Abdecken des während des Betriebes der Arbeitsstation über diese Austrittsöffnung 11 vorstehenden, vorderen Endabschnittes des Streben-Bewegungsraumes ist eine die Austrittsöffnung 11 nach vorne abdeckende, bewegliche Abdeckung 12 vorgesehen, die in einer an die Austrittsöffnung 11 anschließenden Bewegungsbahn in einem vertikalen Abdeckschacht 13 hin und her bewegbar ist, der zwei diese Bewegungsbahn seitlich begrenzende, vertikale Schachtwände 14, 15 besitzt. Die bewegliche Abdeckung 12 weist zu den beiden Schachtwänden 14, 15 senkrecht angeordnete, im Wesentlichen rechteckige und untereinander beweglich verbundene Wände 12a und 12b auf. Die bewegliche Abdeckung 12 besitzt eine mit dem Tragkörper 5 über eine Bewegungskupplung 16 beweglich verbundene Mittelwand 12b. Diese Bewegungskupplung lässt eine Bewegung des Tragkörpers 5 in Richtung der zweiten Querachse zu. Die Abdeckung 12 besitzt weiters zwei mit den Seitenrändern der Mittelwand 12b beweglich verbundene, in sich längenveränderliche Seitenwände 12a, die ihrerseits mit den zu den Schachtwänden 14, 15 senkrechten Seitenrändern der Austrittsöffnung 11 des Maschinenkörpers 10 beweglich verbunden sind. Die in der Mittelwand 12b enthaltene Bewegungskupplung 16 besitzt eine zu den beiden Schachtwänden 14, 15 senkrechte, geradlinige Bewegungsbahn für den Tragkörper 5 und überträgt nur die zu den Schachtwänden 14, 15 parallel verlaufenden Bewegungsanteile der Tragkörperbewegungen vom Tragkörper 5 auf die bewegliche Abdeckung 12. Während des Betriebes der Arbeitsstation ändert sich bei der über die Bewegungskupplung 16 mit dem Tragkörper 5 gekoppelten, beweglichen Abdeckung 12 zufolge der durch die individuell bewegbaren Streben 4 des Bewegungsmechanismus 3 erzeugten Bewegungen des Arbeitskopfes 2 fortlaufend die Länge und die Winkellage der in sich längenveränderlichen Seitenwände 12a der beweglichen Abdeckung 12.

Der Abdeckschacht 13 und die bewegliche Abdeckung 12 bilden eine ausfahrbare, vordere Abdeckhaube für den während des Betriebes der Arbeitsstation über die Austrittsöffnung 11 vorstehenden, vorderen Endabschnitt des Streben-Bewegungsraumes, den die vordere Abdeckhaube ins ich aufnimmt und abdeckt.

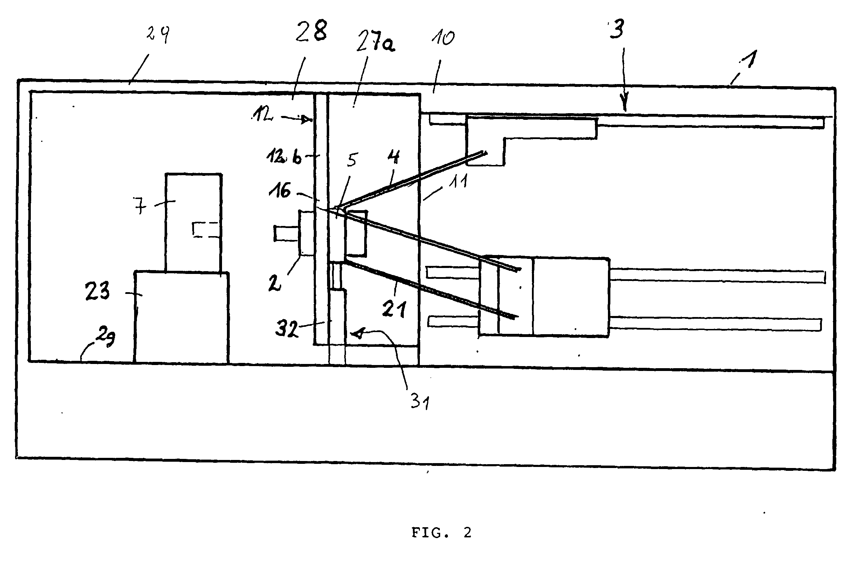

Fig. 2 zeigt eine ähnliche Ausführungsform wie Fig. 1, wobei analoge Teile mit demselben Bezugszeichen versehen sind. Unterschiedlich zu Fig. 1 ist, dass der Bewegungsmechanismus 3 horizontal ist. Er bewegt den Arbeitskopf 2 oberhalb eines horizontalen Maschinenbettes 20 hin und her.

Auf einem am Maschinenbett 20 angeordneten Arbeitstisch 23 ist vor dem Bewegungsmechanismus 3 ein Werkstück 7 angordnet, dessen horizontale Bohrungen durch den Arbeitskopf 2 bearbeitet werden. Der Arbeitskopf 2 wird durch die von den individuell bewegbaren Streben 4 des Bewegungsmechanismus 3 erzeugten Bewegungen gegenüber dem Werkstück 7 positioniert, vorgeschoben und zurückgezogen. Die Hauptbewegungsrichtung ist hier horizontal und zwar in Zeichenebene, die erste Querachse ist horizontal normal zur Zeichenebene, die zweite Querachse ist vertikal. Es liegt daher der Abdeckschacht 28, in dem die Abdeckung 12 hin und her bewegbar ist, horizontal. Er wird nach oben durch eine horizontale Schachtwand 29 und nach unten durch das Maschinenbett 20 begrenzt.

Bei dieser Ausführungsform einer erfindungsgemäßen Arbeitsstation mit horizontalem Bewegungsmechanismus 3 ist eine mit der Mittelwand 12b der beweglichen Abdeckung 12 mitbewegbare, den Tragkörper 5 am Maschinenkörper 10 vertikal abstützende Tragkörper-Stützvorrichtung 31 vorgesehen, die das vom Gewicht des Tragkörpers und des Arbeitskopfes, bezogen auf die hinteren Enden der Streben erzeugte statische Moment, fortlaufend ausgleicht. Die Tragkörper-Stützvorrichtung 31 umfasst zwei, als Arbeitszylinder ausgebildete, vertikale Stützarme 32, die an einem Ende mit dem Tragkörper 5 verbunden sind und die Mittelwand 12 am Maschinenkörper 10 vertikal abstützen. Die Arbeitszylinder des jeweiligen vertikalen Stützarmes 32 sind über bewegliche Leitungen mit einem Hydraulikkreis verbunden und werden von dem Tragkörper 5 mit der Mittelwand 12 der beweglichen Abdeckung 27 mitbewegt.

Alternativ dazu könnten die Stützarme auch als Gasdruckfedern ausgebildet sein.

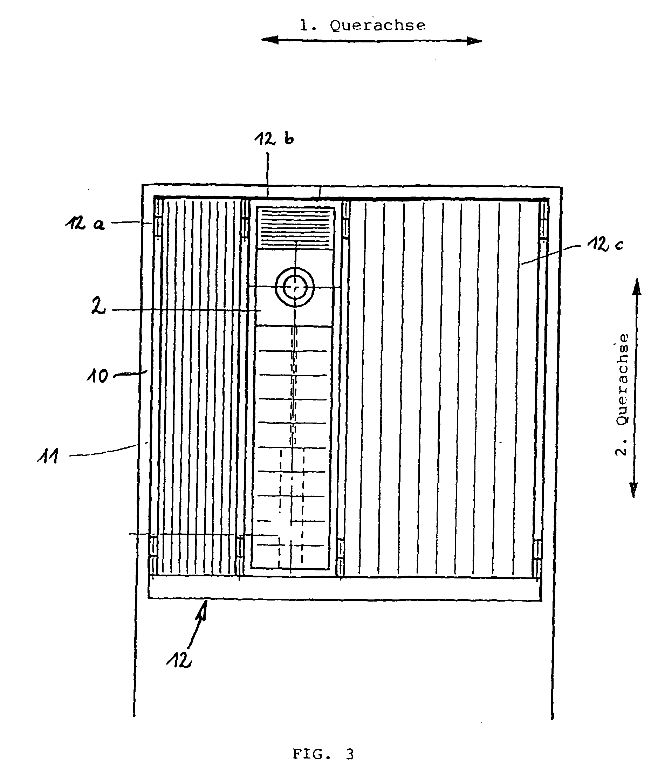

Fig. 3 zeigt einen, den Bewegungsmechanismus umgebenen Maschinenkörper 10 mit seiner dem Arbeitsraum des Arbeitskopfes 2 gewandten Austrittsöffnung 11 und der diese nach vorne abdeckenden und mit dem Arbeitskopf 2 bzw. dessen Tragkörper beweglich verbundenen, vorderen Abdeckung 12.

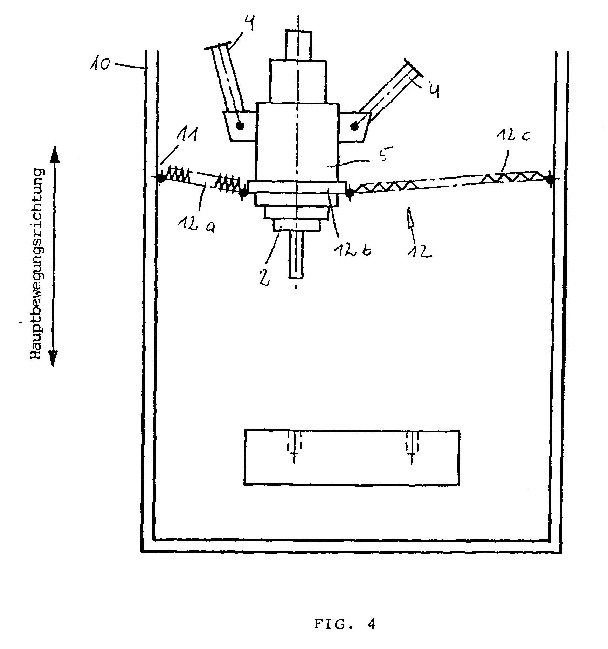

Die Fig. 4-7 zeigen jeweils einen zur Hauptbewegungsrichtung des Arbeitskopfes 2 parallelen Längsschnitt durch den Maschinenkörper 10 einer erfindungsgemäßen Arbeitsstation mit einer dem Arbeitsraum des Arbeitskopfes 2 zugewandte Austrittsöffnung 11 des Maschinenkörpers 10 jeweils nach vorne abdeckenden, vordere Abdeckhaube 12. Von dem die Bewegungen des Arbeitskopfes 2 über individuell bewegbare Streben 4 erzeugenden Bewegungsmechanismus sind nur die vorderen Endabschnitte von zwei an dem, den Arbeitskopf 2 tragenden Tragkörper 5 angelenkten Streben 4 dargestellt.

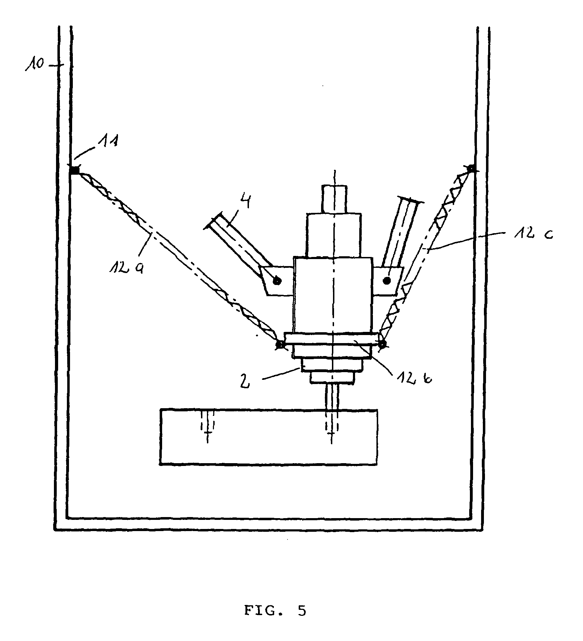

Fig. 4 und 5 zeigen eine vordere Abdeckhaube 12, bei der die längenveränderlichen Seitenwände 12a, 12c von in einer Ebene ausziehbaren und zusammenschiebbaren Faltenbälgen gebildet werden, die an ihren inneren bzw. äußeren Seitenrändern mit der Mittelwand 12b der beweglichen Abdeckung bzw. mit jeweiligen Seitenrand der Austrittsöffnung 11 des Maschinenkörpers 10 schwenkbar verbunden sind. Fig. 4 zeigt die vordere Abdeckhaube 12 bei in den Maschinenkörper 10 hinter die Austrittsöffnung 11 zurückgezogenem Arbeitskopf 2. Fig. 5 zeigt die vordere Abdeckhaube 12 bei aus dem Maschinenkörper 10 über die Austrittsöffnung 11 hinaus nach vorne vorgeschobenen Arbeitskopf 2.

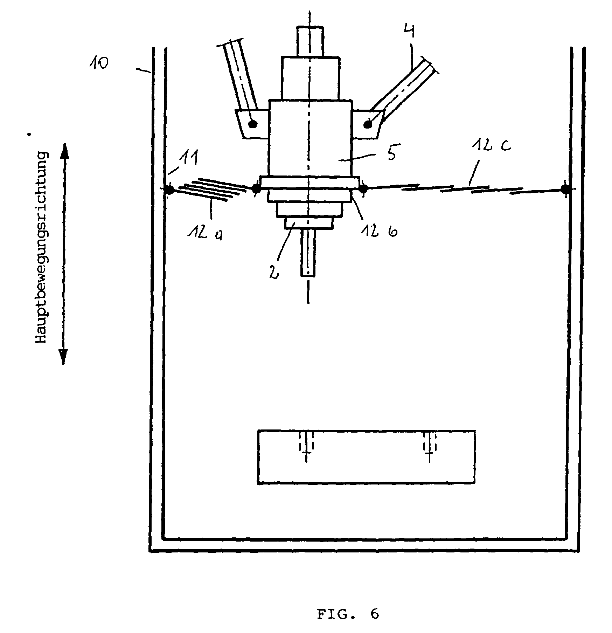

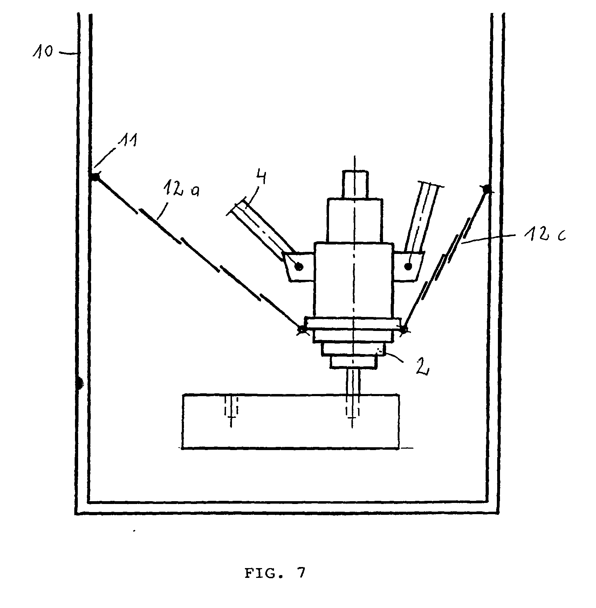

Fig. 6 und 7 zeigen eine vordere Abdeckhaube 12, deren längenveränderliche Seitenwände 12a, 12c von in einer Ebene auseinander ziehbaren und zusammenschiebbaren, untereinander beweglich verbundenen Teleskopblechen gebildet werden. Die Teleskopbleche tragenden, längenveränderliche Seitenwände 12a, 12c sind an ihren inneren bzw. äußeren Seitenrändern mit der Mittelwand 12b der beweglichen Abdeckung bzw. mit dem jeweiligen Seitenrand der Austrittsöffnung 11 des Maschinenkörpers 20 schwenkbar verbunden. Fig. 6 zeigt die, die Teleskopbleche tragende, bewegliche Abdeckung 12 bei in den Maschinenkörper 10 hinter die Austrittsöffnung 11 zurückgezogenem Arbeitskopf 2. Fig. 7 zeigt die, die Teleskopbleche tragende, bewegliche Abdeckung der Abdeckhaube 12 bei aus dem Maschinenkörper 10 über die Austrittsöffnung 11 hinaus nach vorne vorgeschobenen Arbeitskopf 2.

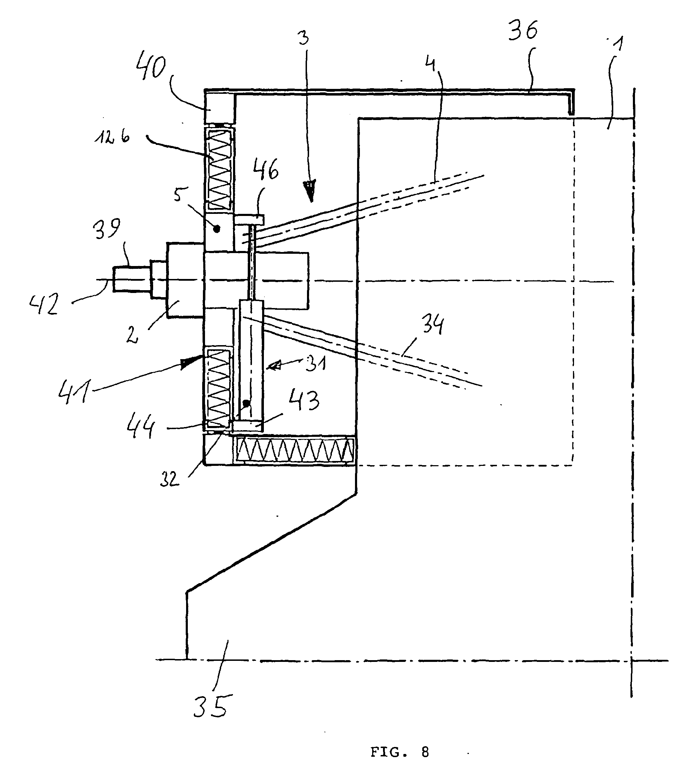

Fig. 8 zeigt eine weitere Ausführungsform einer erfindungsgemäßen Arbeitsstation mit horizontalem Bewegungsmechanismus und rechteckigen Abdeckhaube. Der Bewegungsmechanismus 3 steht mit seinem Streben 4 über die Stirnseite des Maschinengestelles 1 vor. Die Abdeckhaube 36 umgibt den über das Maschinengestell 1 vorgestehenden Teil des Bewegungsraumes der Streben 4 und ist mit ihren vertikalen Seitenwänden am Maschinengestell 1 horizontal verschiebbar geführt. Die Streben 4 tragen an ihren vorderen Enden einen, als vertikal an geordnete Platte ausgebildeten Tragkörper 5, in den ein Arbeitskopf 2 mit horizontal ausgerichteter Arbeitsspindel 39 eingesetzt ist. Der vordere, vertikale Haubenabschnitt 40 enthält eine mit dem Tragkörper 5 gekoppelte Bewegungskopplung 41, die nur die zur horizontalen Hauptbewegungsrichtung parallelen Bewegungsseite der Tragkörperbewegungen auf die Abdeckhaube 36 überträgt. Der vordere Haubenabschnitt 40 weist einen rechteckigen Rahmen auf, in dem sowohl die Mittelwand 12b als auch die Seitenwände (in Fig. 8 vor bzw. hinter der Zeichenebene) befinden. Die Seitenwände können als Faltenbalg oder als Teleskopbleche ausgebildet sein. Die Mittelwand ist in Richtung der ersten Querachse (normal zur Zeichenebene) im rechteckigen Rahmen verschiebbar, die Bewegungskupplung ist innerhalb der Mittelwand 12b in Richtung der zweiten Querachse (vertikal) verschiebbar. Damit ist insgesamgt der Tragkörper innerhalb des rechteckigen Rahmens in Richtung beider Querachsen verschiebbar und die Bewegungskomponente in Hauptbewegungsrichtung bewirkt eine Verschiebung der gesamten Abdeckhaube 36. An der Rückseite des vorderen Haubenabschnittes 40 ist eine Tragkörper-Stützvorrichtung 31 befestigt, deren unterer Querträger 43 mit dem äußeren Rahmen 44 der Bewegungskupplung 41 verbunden ist. Der Querträger 43 trägt zwei, beiderseits der Arbeitsspindel 39 des Arbeitskopfes 2 angeordnete, vertikale Stützarme 32, die sich mit ihren oberen Enden an einem , oberhalb der Arbeitsspindel 39 an der Rückseite des Tragkörpers 5 befestigten, oberen Querträger 46 abstützen.

Die bei den erfindungsgemäßen Arbeitsstationen eingesetzten Bewegungsmechanismen können als Tripoden mit nur drei individuell bewegbaren und unabhängig voneinander antreibbaren Streben ausgebildet sein oder Hexapoden mit sechs individuell bewegbaren und unabhängig voneinander antreibbaren Streben. Die Bewegungsmechanismen können in ihrer Länge individuell veränderbare Streben zum Bewegen des Tragkörpers bzw. Arbeitskopfes besitzen oder durch Linearantriebe individuell verschiebbare und in ihrer Länge unveränderbare Streben besitzen.

Die von den Bewegungsmechanismen der Arbeitsstationen bewegten Arbeitsköpfe sind vorzugsweise Arbeitsköpfe für die spanabhebende Bearbeitung von Werkstücken, wie beispielsweise wassergekühlte Fräsköpfe für die Hochgeschwindigkeitszerspanung von Werkstücken aus Leichtmetall, z.B. zum Bearbeiten von Gussteilen, die aus Aluminium oder Magnesium oder aus einer Aluminiumlegierung oder einer Magnesiumlegierung hergestellt sind.

## Patentansprüche

1. Arbeitsstation mit einem steifen Maschinengestell (1) und einem gegenüber diesem frei bewegbaren Arbeitskopf (2), dessen Bewegungen entlang einer vorgegebenen Hauptbewegungsrichtung und auch entlang einer ersten und einer zweiten Querachse, die schräg oder normal zur Hauptbewegungsrichtung stehen, durch einen vom Maschinengestell (1) getragenen Bewegungsmechanismus (3) erzeugt werden, der einen mit dem Arbeitskopf (2) verbundenen, frei bewegbaren Tragkörper (5) besitzt, der von mit ihm gelenkig verbundenen Streben (4) getragen und bewegt wird, die gegenüber dem Maschinengestell (1) individuell bewegbar und durch im Maschinengestell (1) angeordnete Antriebsmotoren individuell antreibbar sind, wobei das steife Maschinengestell (1) einen den Bewegungsmechanismus (3) umgebenden, den Bewegungsraum der Streben (4) zumindest teilweise in sich aufnehmenden Maschinenkörper (10) bildet, der eine dem Arbeitsraum des Arbeitskopfes (2) zugewandte Austrittsöffnung (11) für die zum Tragkörper (5) führenden Abschnitte der Streben (4) besitzt, wobei zum Abdecken des vorderen Endabschnitts des Bewegungsraums der individuell bewegbaren Streben (4) eine Abdeckung (12) vorgesehen ist, **dadurch gekennzeichnet, dass** die Abdeckung (12) eine in Hauptbewegungsrichtung und in Richtung der ersten Querachse verschiebbare Mittelwand (12b) aufweist, dass der Tragkörper (5) mit der Mittelwand (12b) über eine Bewegungskupplung (16) verbunden ist, die innerhalb der Mittelwand (12b) eine Bewegung in Richtung der zweiten Querachse zulässt, dass in Richtung der ersten Querachse beidseitig an die Mittelwand zwei in sich längenveränderliche Seitenwände (12,a, 12c) anschließen, dass der Austrittsöffnung (11) ein Abdeckschacht (13, 28) vorgelagert ist, der durch zwei zur Mittelwand (12b) und zu den Seitenwänden (12a, 12c) normale Schachtwände (14, 15; 29) seitlich begrenzt ist und dass die Seitenwände (12a, 12c) mit der Mittelwand (12b) und mit den Seitenrändern der Austrittsöffnung (11), an denen die beiden Schachtwände (14, 15) nicht anschließen, schwenkbar verbunden sind.

2. Arbeitsstation nach Anspruch 1, **dadurch gekennzeichnet, dass** als in sich längenveränderliche Seitenwand (12a, 12c) der beweglichen Abdeckung (12) ein jeweils in einer Ebene auseinander ziehbarer und wieder zusammenschiebbarer Faltenbalg vorgesehen ist. (Fig. 4, 5)

3. Arbeitsstation nach Anspruch 1, **dadurch gekennzeichnet, dass** als in sich längeveränderliche Seitenwand (12a, 12b) der beweglichen Abdeckung in einer Ebene auseinander ziehbare und wieder zusammenschiebbare, untereinander beweglich verbundene Teleskopbleche vorgesehen sind. (Fig. 6, 7)

4. Arbeitsstation nach einem der Ansprüche 1 bis 3, **dadurch gekennzeichnet, dass** die Austrittsöffnung (11) und.die Mittelwand (12b) der beweglichen Abdeckung (12) senkrecht zur Hauptbewegungsrichtung des Arbeitskopfes angeordnet ist und dass der Maschinenkörper (10) bis nahe an den Arbeitsraum des Arbeitskopfes (2) heranreicht.

5. Arbeitsstation nach Anspruch 1, **dadurch gekennzeichnet, dass** die Bewegungskupplung bei einem mit seinen Streben (4) Schwenkbewegungen des Tragkörpers (5) erzeugenden Bewegungsmechanismus eine mit dem Tragkörper (5) über ein Kugelgelenk allseitig verschwenkbar verbundene Kulissenplatte besitzt, die in Richtung der zweiten Querachse verschiebbar angeordnet ist und nur die zu den Schachtwänden (14, 15) parallelen Bewegungsanteile der Tragkörperbewegung auf die Mittelwand (12b) der beweglichen Abdeckung (12) überträgt.

6. Arbeitsstation nach einem der Ansprüche 1 bis 5, **dadurch gekennzeichnet, dass** bei einem horizontalen Bewegungsmechanismus (3) eine mit der Mittelwand (12b) der beweglichen Abdeckung (12) mitbewegbare, den Tragkörper (5) am Maschinengestell (1) vertikal abstützende Tragkörper-Stützvorrichtung (31) vorgesehen ist.

7. Arbeitsstation nach Anspruch 6, **dadurch gekennzeichnet, dass** die Tragkörper-Stützvorrichtung (31) zwei parallele, vertikale Stützarme (32) besitzt, die mit dem Tragkörper (5) verbunden sind.

8. Arbeitsstation nach den Ansprüchen 5 und 6, **dadurch gekennzeichnet, dass** die Tragkörper-Stützvorrichtung (31) mit der Kulissenplatte verbunden ist.

9. Arbeitsstation nach Anspruch 8, **dadurch gekennzeichnet, dass** die Tragkörper-Stützvorrichtung (31) zwei parallele, vertikale Stützarme (32) besitzt, die mit der mit dem Tragkörper schwenkbar verbundenen Kulissenplatte verbunden sind.

## Claims

1. Work station with a rigid machine stand (1) and a work head (2) which is freely movable relative to the latter and whose movements along a predetermined main direction of movement and also along a first and a second transverse axis, which are oblique or normal to the main direction of movement, are produced by a movement mechanism (3) which is carried by the machine stand (1) and has a freely movable supporting body (5) which is connected to the work head (2) and which is carried and moved by stays (4) which are articulately connected to it and which are individually movable relative to the machine stand (1) and individually drivable by drive motors arranged in the machine stand (1), wherein the rigid machine stand (1) forms a machine body (10) which surrounds the movement mechanism (3) and which at least partially inherently receives the movement space of the stays (4) and which has an outlet opening (11) facing towards the work space of the work head (2) for the sections of the stays (4) leading to the supporting body (5), wherein a cover (12) is provided for covering the front end section of the movement space of the individually movable stays (4), **characterised in that** the cover (12) has a centre wall (12b) slidable in the main direction of movement and in the direction of the first transverse axis, **in that** the supporting body (5) is connected to the centre wall (12b) by a movement coupling (16) which within the centre wall (12b) allows movement in the direction of the second transverse axis, **in that** in the direction of the first transverse axis two inherently variable-length side walls (12a, 12c) adjoin the centre wall on both sides, **in that** in front of the outlet opening (11) is mounted a cover shaft (13, 28) which is laterally defined by two shaft walls (14, 15; 29) normal to the centre wall (12b) and to the side walls (12a, 12c) and **in that** the side walls (12a, 12c) are pivotably connected to the centre wall (12b) and to the side edges of the outlet opening (11) which are not adjoined by the two shaft walls (14, 15).

2. Work station according to claim 1, **characterised in that** a concertina which can be pulled apart and pushed together again in one plane is provided as the inherently variable-length side wall (12a, 12c) of the movable cover (12) (Figs. 4, 5).

3. Work station according to claim 1, **characterised in that** telescopic plates which can be pulled apart and pushed together again in one plane and which are movably connected to each other are provided as the inherently variable-length side wall (12a, 12b) of the movable cover (Figs. 6, 7).

4. Work station according to one of claims 1 to 3, **characterised in that** the outlet opening (11) and the centre wall (12b) of the movable cover (12) are arranged perpendicularly to the main direction of movement of the work head and **in that** the machine body (10) extends close to the work space of the work head (2).

5. Work station according to claim 1, **characterised in that**, in the case of a movement mechanism which with its stays (4) produces pivot movements of the supporting body (5), the movement coupling (16) has a link plate which is connected to the supporting body (5) by a ball joint to allow pivoting in all directions and which is arranged to be slidable in the direction of the second transverse axis and transmits only the movement fractions of the supporting body movement which are parallel to the shaft walls (14, 15), to the centre wall (12b) of the movable cover (12).

6. Work station according to one of claims 1 to 5, **characterised in that**, in the case of a horizontal movement mechanism, there is provided a supporting body-supporting device (31) which is movable with the centre wall (12b) of the movable cover (12) and which vertically supports the supporting body (5) on the machine stand (1).

7. Work station according to claim 6, **characterised in that** the supporting body-supporting device (31) has two parallel, vertical support arms (32) which are connected to the supporting body (5).

8. Work station according to claims 5 and 6, **characterised in that** the supporting body-supporting device (31) is connected to the link plate.

9. Work station according to claim 8, **characterised in that** the supporting body-supporting device (31) has two parallel, vertical support arms (32) which are connected to the link plate pivotably connected to the supporting body.

## Revendications

1. Poste de travail ayant un bâti de machine (1) rigide et une tête de travail (2) déplaçable librement par rapport à ce bâti, dont les déplacements, le long d'une direction de déplacement principale prédéterminée et aussi le long d'un premier et d'un second axes transversaux qui sont disposés en biais ou perpendiculairement par rapport à la direction de déplacement principale, sont engendrés par un mécanisme de déplacement (3) supporté par le bâti de machine (1), qui comporte un organe de support (5) relié à la tête de travail (2), librement déplaçable, qui est supporté et déplacé par des barres (4) reliées à lui de façon articulée qui sont déplaçables individuellement par rapport au bâti de machine (1) et qui peuvent être entraînées individuellement par des moteurs d'entraînement disposés dans le bâti de machine (1), dans lequel le bâti de machine (1) rigide forme un corps de machine (10) entourant le mécanisme de déplacement (3), accueillant au moins partiellement l'espace de déplacement des barres (4), le corps de machine (10) possédant un orifice de sortie (11) opposé à l'espace de travail de la tête de travail (2), pour les sections des barres (4) conduisant à l'organe de support (5), un couvercle (12) étant prévu pour le recouvrement de la section terminale avant de l'espace de déplacement des barres (4) déplaçables individuellement, **caractérisé en ce que** le couvercle (12) présente une cloison centrale (12b) mobile dans la direction de déplacement principale et dans la direction du premier axe transversal, **en ce que** l'organe de support (5) est relié à la cloison centrale (12b) au moyen d'un raccordement de déplacement (16) qui, à l'intérieur de la cloison centrale (12b), permet un déplacement dans la direction du deuxième axe transversal, **en ce que** deux parois latérales (12a, 12c) à longueur variable sont des deux côtés raccordées à la cloison centrale dans la direction du premier axe transversal, **en ce qu'**une cuvette de couvercle (13, 28) est disposée à l'orifice de sortie (11), limitée latéralement par deux parois de cuvette (14, 15 ; 29) perpendiculaires à la cloison centrale (12b) et aux parois latérales (12a, 12c) et **en ce que** les parois latérales (12a, 12c) sont reliées en rotation à la cloison centrale (12b) et aux bords latéraux de l'orifice de sortie (11) auxquels les deux parois de cuvettes (14, 15) ne sont pas raccordées.

2. Poste de travail selon la revendication 1, **caractérisé en ce qu'**un soufflet, à chaque fois étirable et repliable dans un plan, est prévu comme paroi latérale (12a, 12c) à longueur variable du couvercle déplaçable (12) (figures 4, 5).

3. Poste de travail selon la revendication 1, **caractérisé en ce que** des tôles télescopiques étirables et repliables dans un plan, reliées de façon déplaçable entre elles, sont prévues comme paroi latérale (12a, 12c) à longueur variable du couvercle déplaçable (figures 6, 7).

4. Poste de travail selon l'une des revendications 1 à 3, **caractérisé en ce que** l'orifice de sortie (11) et la cloison centrale (12b) du couvercle déplaçable (12) sont disposés perpendiculairement à la direction de déplacement principale de la tête de travail et **en ce que** le corps de machine (10) s'avance jusqu'à proximité de l'espace de travail de la tête de travail (2).

5. Poste de travail selon la revendication 1, **caractérisé en ce que** le raccordement de déplacement (16) comporte, dans le cas d'un mécanisme de déplacement engendrant à l'aide de ses barres (4) des mouvements de rotation de l'organe de support (5), une plaque à coulisse reliée en rotation de tous les côtés à l'organe de support (5) au moyen d'une articulation sphérique, plaque à coulisse qui est disposée mobile dans la direction du deuxième axe transversal et ne transmet à la cloison centrale (12b) du couvercle déplaçable (12) que les parties de déplacement du déplacement de l'organe de support parallèles aux parois de cuvette (14, 15).

6. Poste de travail selon l'une des revendications 1 à 5, **caractérisé en ce que**, dans le cas d'un mécanisme de déplacement horizontal (3), un dispositif de soutien de l'organe de support (31) est prévu déplaçable conjointement avec la cloison centrale (12b) du couvercle déplaçable (12), soutenant verticalement l'organe de support (5) sur le bâti de machine (1).

7. Poste de travail selon la revendication 6, **caractérisé en ce que** le dispositif de soutien de l'organe de support (31) comporte deux bras de soutien (32) parallèles, verticaux, qui sont reliés à l'organe de support (5).

8. Poste de travail selon les revendications 5 et 6, **caractérisé en ce que** le dispositif de soutien de l'organe de support (31) est relié à la plaque à coulisse.

9. Poste de travail selon la revendication 8, **caractérisé en ce que** le dispositif de soutien de l'organe de support (31) comporte deux bras de soutien (32) parallèles, verticaux, qui sont reliés à la plaque à coulisse reliée en rotation à l'organe de support.
